# FASCICULE DE BREVET EUROPEEN

(11) **EP 2 425 283 B1**
(45) Date de publication et mention de la délivrance du brevet: **26.06.2019**
(21) Numéro de dépôt: 10727056.3
(22) Date de dépôt: 28.04.2010
(51) Int. Cl.: G02B 5/18, H01S 3/00, H01S 3/23, H01S 3/08

(54) **RESEAU DE DIFFRACTION METALLIQUE EN REFLEXION A HAUTE TENUE AU FLUX EN REGIME FEMTOSECONDE, SYSTEME COMPRENANT UN TEL RESEAU ET PROCEDE D'AMELIORATION DU SEUIL D'ENDOMMAGEMENT D'UN RESEAU DE DIFFRACTION METALLIQUE**
METALLBEUGUNGSARRAY MIT HOHEM REFLEXIONSWIDERSTAND GEGENÜBER EINEM FEMTOSEKUNDENMODENFLUSS, SYSTEM MIT EINEM SOLCHEN ARRAY UND VERFAHREN ZUM VERBESSERN DER BESCHÄDIGUNGSSCHWELLE EINES METALLBEUGUNGSARRAYS
METAL DIFFRACTION ARRAY WITH HIGH REFLECTION RESISTANCE TO A FEMTOSECOND MODE FLOW, SYSTEM INCLUDING SUCH AN ARRAY, AND METHOD FOR IMPROVING THE DAMAGE THRESHOLD OF A METAL DIFFRACTION ARRAY

(30) Priorité: 29.04.2009 FR 0952832
(43) Date de publication de la demande: 07.03.2012
(73) Titulaire: Horiba Jobin Yvon SAS, 91160 Longjumeau (FR)
(72) Inventeur: DESSEROUER, Frédéric, 91470 Les Molieres (FR)
(74) Mandataire: Jacobacci Coralis Harle
(86) Numéro de dépôt international: PCT/FR2010/050808
(87) Numéro de publication internationale: WO 2010/125308

(56) Documents cités:
- US-A1- 2004 190 141
- US-A1- 2004 190 141
- US-A1- 2005 030 627
- NEAUPORT J ET AL: "Effect of electric field on laser induced damage threshold of multilayer dielectric gratings" OPTICS EXPRESS OPTICAL SOCIETY OF AMERICA USA, no. 19, 17 septembre 2007 (2007-09-17), pages 12508-12522, XP002566195 ISSN: 1094-4087 cité dans la demande
- Ragnar Bödefeld: "Alternative laseroptische Bauelemente für ultrakurze Pulse" Dissertation, Friederich Schiller Universität Jena 5 novembre 2002 (2002-11-05), XP002566251 Jena (Deutschland) Extrait de l'Internet: URL:http://www.dart-europe.eu/full.php?id= 76028 [extrait le 2010-02-01]

## Description

La présente invention concerne un réseau de diffraction en réflexion destiné à être utilisé dans une chaîne laser impulsionnelle et ayant une tenue au flux laser améliorée comparé à un réseau métallique classique en régime femtoseconde.

Dans les domaines de la physique des plasmas ou de la fusion nucléaire on utilise aujourd'hui des lasers à impulsions ultracourtes (dont la durée d'impulsion est inférieure à 500 fs) avec des énergies de plus en plus importantes dans le but d'atteindre des puissances crêtes approchant le petawatt (PW) voire plus.

Or, la puissance maximum atteignable est limitée par la tenue au flux des composants optiques. La tenue au flux laser d'un composant optique dépend notamment de la densité d'énergie par unité de surface et de la durée des impulsions.

Les problèmes de seuil de dommage des composants optiques dans les lasers à impulsion haute énergie ont été partiellement résolus par la technique de l'amplification à dérive de fréquence, en anglais CPA (Chirped Pulse Amplification). Le principe du CPA est d'élargir temporellement l'impulsion lumineuse, réduisant ainsi la puissance crête, de l'amplifier puis, en fin de chaîne laser, de la recomprimer temporellement pour avoir l'impulsion courte voulue. Ainsi la puissance lumineuse pendant l'amplification peut être réduite de plusieurs ordres de grandeur. Cependant, le risque de détruire un composant optique persiste sur l'étage effectuant la compression de l'impulsion, basé notamment sur l'utilisation de réseaux de diffraction. Certains de ces composants sont en effet exposés à l'impulsion amplifiée en énergie et compressée temporellement donc ayant la puissance crête la plus importante. Les réseaux de diffraction des compresseurs sont ainsi les composants limitants en termes de tenue au flux.

Les réseaux de diffraction pour compression d'impulsion ont tout d'abord été des réseaux métalliques classiques. Pour la compression d'impulsions dans le domaine infrarouge (à 800 nm, 1053 nm ou 1550 nm), on n'utilise pas des réseaux en Aluminium, car leur efficacité de diffraction, générallement inférieure à 90%, est insuffisante. On utilise plutôt des réseaux recouverts d'une couche en Or. Les réseaux en Or offrent une excellente efficacité de diffraction sur une large bande passante spectrale et ne requièrent pas de couche protectrice puisque l'or est un matériau inoxydable. Toutefois, les réseaux en Or souffrent d'une tenue au flux laser limitée en régime femtoseconde. Ainsi pour le domaine femtoseconde, avec des impulsions plus courtes que 500 fs, le seuil de dommage est de l'ordre de 0,2 à 0,3 J/cm² pour les réseaux Or classiques.

Une première solution pour permettre d'augmenter la puissance laser est d'augmenter les tailles des faisceaux et des composants optiques afin de diminuer l'éclairement surfacique. Mais l'augmentation de la taille des optiques notamment pour les réseaux de diffraction se heurte très vite à des limitations techniques de production ainsi qu'à une augmentation importante du coût de fabrication. Il y a donc un très grand intérêt à augmenter la tenue au flux des réseaux de diffraction.

Une autre solution pour augmenter encore l'efficacité de diffraction et la tenue au flux a été de fabriquer des réseaux de diffraction sur des miroirs diélectriques (MLD : multi-layer dielectric). Un réseau MLD comprend généralement un empilement alterné d'un nombre important de couches de deux matériaux diélectriques totalement transparents d'indices optiques différents et alternées dans le sens de l'épaisseur et un réseau formé dans la dernière couche mince en surface de l'empilement multicouche. Ces réseaux MLD sont décrits en détail dans de nombreux articles, par exemple : « Design of high-efficiency dielectric reflection grating » by Shore et al., JOSA A, Vol. 14, Issue 5, pp. 1124-1136, « High-Efficiency Dielectric Reflection Gratings: Design, Fabrication, and Analysis » by Hehl et al., Applied Optics, Vol. 38, Issue 30, pp. 6257-6271, « Design of diffraction gratings for multipetawatt laser compressors » by Bonod et al., Proc. SPIE, Vol. 5962, 59622M (2005).

Ces publications préconisent de fabriquer des réseaux de diffraction à base de matériaux entièrement diélectriques, transparents et sans absorption, comprenant un nombre élevé de bicouches, pour permettre d'obtenir des réseaux MLD dont la tenue au flux est deux à trois fois meilleure que celle des réseaux comprenant une seule couche d'or. En théorie, les réseaux MLD ont également une efficacité de diffraction supérieure à celle des réseaux en Or. Les réseaux MLD remplacent ainsi progressivement les réseaux métalliques en Or dans les compresseurs d'impulsions de très haute intensité.

Cependant, les réseaux MLD sont plus compliqués à fabriquer que les réseaux métalliques et donc plus coûteux. De plus, les réseaux MLD ont une bande passante spectrale trop limitée (quelques dizaines de nm) pour être utilisés sur les chaînes lasers à impulsions ultra-brèves (< 50 fs). En effet, la durée du pulse laser est liée par transformée de Fourrier à la largeur de bande spectrale du laser, ce qui signifie que le produit de la durée d'impulsion par la largeur spectrale du rayonnement lumineux est une constante. A titre d'information, à la longueur d'onde centrale de 800 nm, couramment utilisée aujourd'hui, ce produit vaut environ 1000 fs.nm, ce qui signifie que pour obtenir une impulsion de largeur temporelle inférieure à 10 fs, il faut une bande passante supérieure à 100 nm. On parle ici de bande passante à très haute efficacité (>90%) sur un domaine de longueur d'onde entourant la longueur d'onde centrale d'intérêt. Un réseau de diffraction MLD ne peut avoir ce type de performances en bande passante. Les réseaux MLD ont une bande passante typiquement inférieure à 50 nm à la longueur d'onde centrale de 1053 nm.

La tenue au flux des éléments optiques (matériaux, miroirs, réseaux de diffraction) exposés à des impulsions laser est un domaine d'investigation encore vaste où tous les phénomènes ne sont pas encore expliqués. Les dommages dans les matériaux dus au flux laser dans les régimes d'impulsion de durée nanoseconde à picoseconde sont assez bien connus maintenant. Dans le domaine femtoseconde de nouveaux phénomènes se produisent et le mode d'endommagement est différent.

Dans les régimes picoseconde et nanoseconde les principaux phénomènes sont de nature thermique et liés à l'absorption notamment pour les réseaux métalliques. Quel que soit le matériau, le seuil d'endommagement suit une loi en racine carrée de la durée d'impulsion. Les articles suivants décrivent un certains nombre de mesures et de modèles d'endommagement laser sur des miroirs et des réseaux de diffraction : « Optical ablation by high-power short-pulse lasers » by Stuart et al., JOSA B, Vol. 13, Issue 2, pp. 459-468, « Short-pulse laser damage in transparent materials as a function of pulse duration » by Tien et al, Physical Review Letters, Volume 82, Issue 19, May 10, 1999, pp.3883-3886.

Pour des durées d'impulsions femtoseconde, on s'écarte de cette loi, les phénomènes physiques à l'échelle locale d'un trait du réseau semblent alors liés au carré du champ électrique de l'onde électromagnétique lumineuse dans les matériaux. Il est ainsi montré par les articles suivants : « Multilayer dielectric gratings for petawatt-class laser systems » by Britten et al. Proceedings of the SPIE, Volume 5273, pp. 1-7 (2004), « Effect of electric field on laser induced damage threshold of multilayer dielectric gratings » by Neauport et al, Optics Express, Vol. 15, Issue 19, pp. 12508-12522, que l'endommagement des réseaux de diffraction en régime femtoseconde (durée d'impulsion inférieure à 500fs.) est fortement lié à la valeur du champ électrique au carré dans le matériau constituant le profil des traits du réseau de diffraction.

En effet, pour des réseaux de diffraction très efficaces (c'est-à-dire dont l'énergie diffractée est quasiment totalement concentrée dans l'ordre de diffraction utile (l'ordre - 1 pour ce type de réseau)), il y a formation d'ondes stationnaires dues à l'interférence du champ incident avec le champ diffracté et le champ électrique peut avoir une amplitude double de celle du champ incident à proximité ou à l'intérieur du matériau. On parle alors de renforcement du champ électrique.

Un réseau de diffraction métallique classique fonctionne en polarisation TM avec un traitement métallique généralement en or. Le champ électrique au niveau du métal et de l'interface métal-vide connaît des zones de renforcement de champ important à certains points du profil des traits qui constituent les zones de faiblesse pour la tenue au flux.

La tenue au flux laser dépend bien sûr aussi de la qualité de fabrication : pureté des matériaux utilisés, densité des matériaux, absence d'impureté ou de défauts (craquelure, inclusion, bulles, rugosité).

Le type de matériau utilisé influe logiquement aussi beaucoup sur la tenue au flux comme l'explique bien l'article suivant sur différents matériaux transparents : « Scaling laws of femtosecond laser pulse induced breakdown in oxide films » by Mero et al., Phys. Rev. B 71, 115109 (2005).

Des réseaux de diffraction à base métallique sont également divulgués dans US2004/0190141 A1 et US2005/0030627 A1.

L'invention vise à produire un réseau de diffraction en réflexion ayant à la fois une efficacité de diffraction élevée, une bande passante spectrale étendue (plusieurs dizaines de nanomètres) et un seuil d'endommagement amélioré permettant l'exposition du réseau à un flux laser de forte puissance en régime femtoseconde.

A cet effet, l'invention concerne un réseau de diffraction métallique en réflexion à très haute efficacité de diffraction pour diffracter des impulsions laser en régime femtoseconde, tel que défini par l'ensemble des caractéristiques techniques divulguées par la revendication 1.

En particulier, ledit réseau est constitué d'un substrat comprenant un ensemble de traits de pas Λ, le substrat étant métallique ou recouvert d'une couche métallique, et ledit réseau comprenant une couche mince en matériau diélectrique d'épaisseur e, ladite couche mince diélectrique recouvrant la surface métallique des traits du réseau, ledit réseau étant apte à recevoir une onde électromagnétique lumineuse impulsionnelle en régime femtoseconde, le substrat étant recouvert d'une couche métallique en Or. Selon l'invention, l'épaisseur e de la couche mince diélectrique est inférieure à 50nm, l'épaisseur e étant apte à diminuer d'au moins un facteur trois les maxima du carré du champ électrique de l'onde électromagnétique lumineuse sur la surface métallique et dans la couche métallique du substrat, comparé au carré du champ électrique en surface d'un réseau métallique dépourvu de couche mince diélectrique, de manière à améliorer la tenue au flux laser du réseau de diffraction en régime femtoseconde.

Selon des aspects particuliers de l'invention :
- le réseau de diffraction est un réseau polarisé TM ;
- les traits du réseau ont, dans un plan transverse à la direction des traits, un profil sinusoïdal, pseudo-sinusoïdal, triangulaire, rectangulaire, trapézoïdal ou pseudo-trapézoïdal ;
- la couche mince diélectrique a une épaisseur e inférieure à la profondeur de modulation h des traits du réseau ;
- la couche mince diélectrique est en silice (SiO₂) ;

L'invention concerne également un système d'amplification d'impulsions laser à dérive de fréquence (CPA) comprenant un étage pour étirer temporellement les impulsions laser, un ou plusieurs étages d'amplification, et un étage de compression pour compresser temporellement les impulsions amplifiées, dans lequel l'étage de compression comprend au moins un réseau de diffraction métallique recouvert d'une couche mince diélectrique selon l'invention.

L'invention concerne enfin un procédé d'amélioration du seuil d'endommagement d'un réseau de diffraction métallique à un faisceau laser intense en régime femtoseconde, tel que décrit à la revendication 7, comprenant une étape de sélection d'un réseau de diffraction à très haute efficacité de diffraction en réflexion constitué d'un substrat comprenant un ensemble de traits de pas Λ, et d'une couche métallique en or recouvrant ledit substrat. Selon l'invention, le procédé d'amélioration comprend une étape de dépôt d'une couche mince diélectrique sur la surface métallique des traits du réseau, ladite couche mince diélectrique étant transparente sur la bande passante spectrale des impulsions femtoseconde et l'épaisseur e de la couche diélectrique étant apte à diminuer d'au moins un facteur trois les maxima du champ électrique de l'onde électromagnétique lumineuse sur la surface métallique et dans la couche métallique, comparé au champ électrique en surface d'un réseau métallique dépourvu de couche mince diélectrique.

La présente invention concerne également les caractéristiques qui ressortiront au cours de la description qui va suivre et qui devront être considérées isolément ou selon toutes leurs combinaisons techniquement possibles.

Cette description, donnée à titre d'exemple non limitatif, fera mieux comprendre comment l'invention peut être réalisée en référence aux dessins annexés sur lesquels :
- la figure 1 représente schématiquement un réseau de diffraction en réflexion selon l'art antérieur, vu en coupe dans un plan transverse aux traits du réseau, exposé à un faisceau incident polarisé TM et diffractant dans un ordre P;
- la figure 2 représente schématiquement une vue en coupe de deux traits d'un réseau de diffraction métallique selon l'art antérieur ;
- la figure 3 représente la courbe spectrale d'efficacité de diffraction en polarisation TM d'un réseau métallique selon l'art antérieur ;
- la figure 4 représente schématiquement une vue en coupe de deux traits d'un réseau de diffraction selon un mode de réalisation de l'invention ;
- la figure 5 représente les courbes d'efficacité de diffraction en polarisation TM de réseaux de diffraction selon l'invention en fonction de l'épaisseur de la couche diélectrique et à différentes longueurs d'onde ;
- la figure 6 représente la courbe spectrale d'efficacité de diffraction en polarisation TM d'un réseau selon un mode de réalisation de l'invention ;
- la figure 7A représente le profil de modulation des traits d'un réseau vu en coupe localement (deux traits) dans un plan transverse aux traits du réseau ;
- la figure 7B représente une simulation du carré du champ électrique de l'onde électromagnétique lumineuse dans le plan de la figure 7A à une distance de 5 nm en avant de la surface métallique d'un réseau exposé à un flux laser respectivement dans le cas d'un réseau métallique classique (trait plein) et dans le cas d'un réseau selon un mode de réalisation de l'invention (tirets), ces deux réseaux ayant un profil de traits conforme à celui représenté en figure 7A ;
- la figure 7C représente une simulation du carré du champ électrique de l'onde électromagnétique lumineuse dans le plan de la figure 7A à une distance de 30 nm en avant de la surface métallique d'un réseau exposé à un flux laser dans le cas un réseau métallique classique (trait plein) et dans le cas d'un réseau selon un mode de réalisation de l'invention (tirets), ces deux réseaux ayant un profil de traits représenté en figure 7A.

L'invention concerne en particulier un procédé d'amélioration de la tenue au flux laser de réseaux de diffraction réflectifs métalliques soumis à des impulsions laser ultra-intense et ultra-courtes (durée d'impulsion <500 fs).

Le domaine spectral actuel de travail dans le domaine des lasers à impulsions courtes est situé dans le proche infrarouge (700nm-1100 nm). Les impulsions ultra-courtes se font principalement à une longueur d'onde centrale de 800 nm, milieu de la plage de gain du cristal Ti :Saphir utilisé le plus couramment dans les chaînes laser à impulsions ultra-brèves.

Dans le domaine des impulsions femtoseconde, il est établi qu'un des paramètres influant la tenue au flux est le carré du champ électrique dans le matériau constituant le composant optique. Pour les réseaux de diffraction à haute efficacité de diffraction, le champ électrique local autour du profil du réseau et à l'intérieur du ou des matériaux constituant le réseau peut être renforcé par effet d'interférences, créant ainsi des « points chauds » qui, s'ils sont dans ou proche de la matière, diminuent le seuil d'endommagement du composant.

L'invention décrit une méthode permettant de repousser ces « points chauds », ces zones de renforcement de champ électrique, en dehors de la matière constituant le réseau de diffraction pour un réseau métallique modifié et loin de l'interface métallique qui constitue le point faible en termes d'endommagement pour les réseaux de l'art antérieur.

L'invention consiste à déposer une couche de matériau diélectrique transparent sur un réseau métallique. Ladite couche de matériau diélectrique doit être assez épaisse pour être déposée avec les techniques habituelle de dépôt sous vide sur une surface modulée comme l'est un réseau de diffraction. Mais la couche de diélectrique doit être la moins épaisse possible pour ne pas dégrader l'efficacité du réseau sur la bande spectrale considérée. Un tel réseau de diffraction métallique modifié fonctionne en polarisation TM comme fonctionne un réseau métallique de l'état de l'art antérieur. L'épaisseur de la couche diélectrique est suffisamment fine pour ne pas dégrader les performances en efficacité et en bande passante du réseau métallique original. Le réseau ainsi fabriqué fonctionne toujours en polarisation TM.

L'ajout d'une couche mince diélectrique a pour effet de repousser les zones de renforcement du champ hors du profil du réseau, c'est-à-dire à la frontière du matériau diélectrique. L'amplitude du champ électrique (et son carré) est alors bien plus faible dans le matériau diélectrique et à l'interface métal-diélectrique augmentant ainsi la tenue au flux par rapport à un réseau métallique simple.

Afin d'optimiser encore la tenue au flux on choisit de préférence comme matériau diélectrique un matériau ayant la plus grande tenue au flux intrinsèque comme la silice (SiO₂). D'autres matériaux diélectriques peuvent également être utilisés (TiO₂, Ta₂O₅, HfO₂ et Al₂O₃) selon les applications.

Le champ électrique de l'onde électromagnétique lumineuse voit son amplitude à l'interface métal diélectrique fortement diminuer par rapport à l'amplitude du champ à l'interface métal-vide (ou air) comparé à un réseau métallique de l'art antérieur. Le champ dans le matériau diélectrique est aussi assez faible et le maximum de renforcement de champ se situe en dehors de la matière. Ainsi le champ électrique à l'interface métallique est considérablement diminué par rapport au réseau métallique de l'art antérieur.

La tenue au flux étant dans ce domaine inversement proportionnelle au carré du champ, un tel réseau métallique modifié a donc une tenue au flux bien meilleure qu'un réseau métallique de l'art antérieur. De manière complémentaire, le matériau diélectrique peut aussi être choisi de façon à ce que sa tenue au flux intrinsèque soit la plus élevée possible.

Pour illustrer l'invention nous prenons un exemple de réseau pour compression d'impulsion classiquement utilisé pour des valeurs normales d'utilisation.

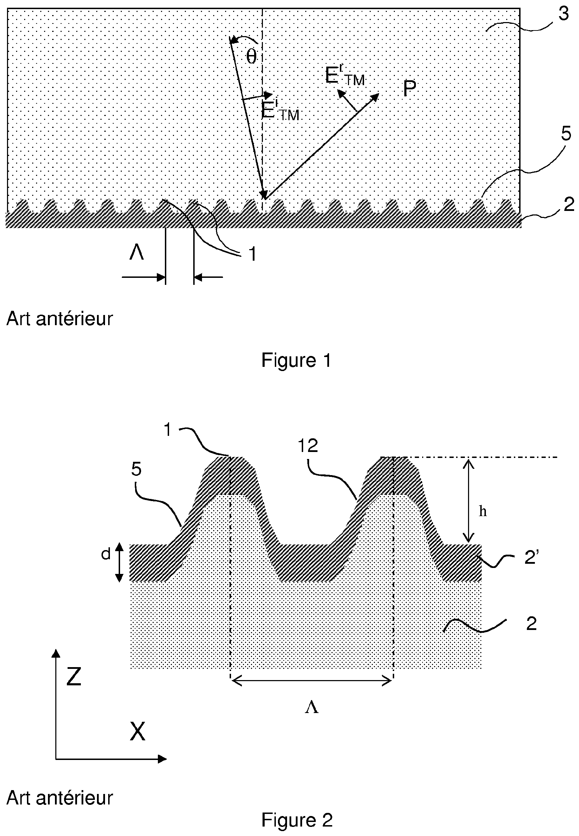

On s'intéresse plus précisément à un réseau de diffraction 5, de densité de traits N=1480 tr/mm (soit un pas Λ=675 nm), utilisé sous un angle d'incidence θ constant de 42° par rapport à la normale au réseau, cet angle correspond à une déviation entre le faisceau incident et réfléchi de 11° à la longueur d'onde centrale de 800nm dans l'ordre -1 en réflexion (cf Figure 1).

En pratique les profils de trait des réseaux de diffraction réalisés par les fabricants peuvent être de type lamellaire, sinusoïdal, ou pseudo-sinusoïdal, trapézoïdal ou trapézoïdal arrondi ou bien en forme de plot arrondi selon le mode de réalisation utilisé (holographique, holographique usiné, usinage ionique, e-beam) et les paramètres décrivant le profil sont multiples. L'invention s'applique à tous les types de profils de réseaux.

Pour simplifier l'explication de l'invention le profil étudié est un profil de traits 1 sinusoïdal ce qui réduit la description du profil à un seul paramètre, la hauteur de modulation h du réseau.

Nous nous intéressons au réseau de l'art antérieur représenté en coupe sur les figures 1 et 2 (zoom sur une vue en coupe transverse de deux traits du réseau). Le réseau 5 comprend un substrat 2 donnant la forme du profil des traits du réseau de diffraction. Le substrat 2 peut être un substrat en matériau métallique massif ou recouvert par une couche 2' en matériau métallique. Le métal (2, 2') a un indice nₘ=0,5+i^{∗}10 avec une partie complexe importante et une épaisseur d suffisante pour assurer une bonne réflectivité en polarisation TM. La forme des traits des figures 1-2 est de type plot pour l'illustration, la profondeur de modulation h donne la hauteur des traits du réseau. Le pas du réseau vaut Λ. Les traits 1 sont reproduits dans la direction X transverse aux traits du réseau. Le faisceau incident sur la surface métallique 12 des traits du réseau est diffracté.

Pour simplifier l'explication nous nous intéressons à un réseau sinusoïdal afin de réduire le nombre de variable décrivant le profil des traits du réseau à un seul paramètre, la profondeur de modulation h.

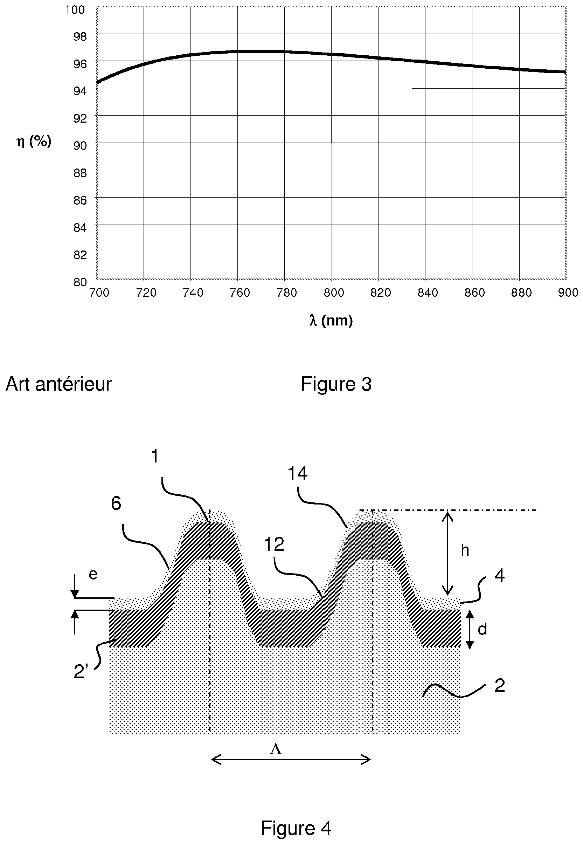

La figure 3 représente une courbe d'efficacité de diffraction η simulée pour un réseau métallique sinusoïdal de l'art antérieur ayant pour modulation h=240 nm à l'incidence de 42° en polarisation TM en fonction de la longueur d'onde λ sur un domaine de compris entre 700 nm et 900 nm.

L'efficacité de diffraction du réseau métallique 5 dans l'ordre -1 est donc très élevée (> 94%) sur une large plage de longueur d'onde.

La figure 4 représente schématiquement la structure des traits d'un réseau de diffraction 6 selon un exemple de réalisation de l'invention (zoom sur une vue en coupe transverse de deux traits du réseau 6). Le réseau 6 comprend une couche mince 4 de matériau diélectrique déposée sur la surface 12 d'un réseau métallique 5 tel que décrit en lien avec les figures 1-2.

À titre d'exemple, l'indice de réfraction de la couche mince 4 diélectrique est ici égal à 1,5. L'autre paramètre est l'épaisseur du traitement diélectrique déposé e. La surface 14 exposée au faisceau laser incident est donc la surface de la couche mince diélectrique 4. L'épaisseur e de la couche diélectrique 4 est optimisée pour éviter une dégradation trop importante des performances en efficacité de diffraction du réseau 6. La couche 4 ne doit pas être trop épaisse.

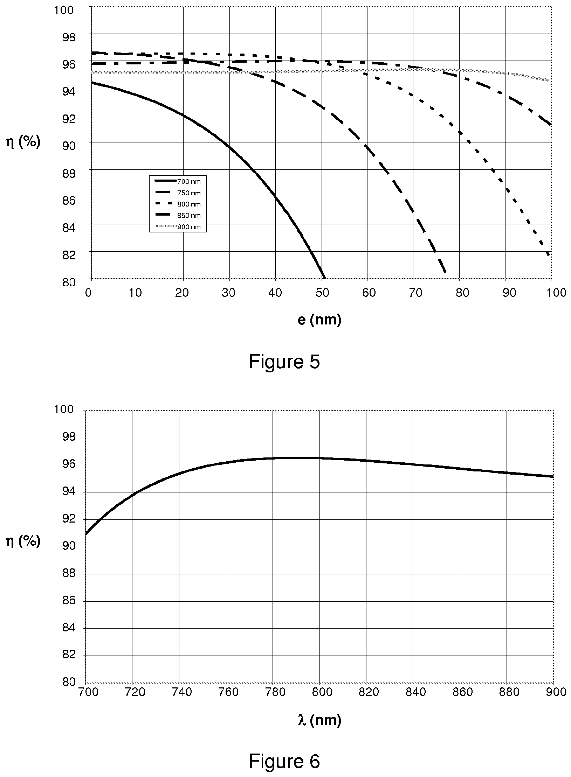

La figure 5 présente des courbes de simulation de l'efficacité de diffraction d'un réseau de diffraction 6 en fonction de l'épaisseur e du traitement diélectrique 4 déposé en surface d'un réseau métallique (identique à celui utilisé pour la courbe de la figure 3), ceci pour cinq longueurs d'onde réparties de manière uniforme sur le spectre étudié (respectivement λ égale à 700, 750, 800, 850 et 900 nm) en polarisation TM.

La couche 4 de matériau diélectrique a pour effet de dégrader l'efficacité de diffraction η du réseau 6 lorsque son épaisseur e augmente, ceci à toutes les longueurs d'ondes mais avec une amplitude différente. Ce sont les basses longueurs d'onde (700 et 750 nm) qui voient leur efficacité η diminuer le plus rapidement en fonction de l'épaisseur e de traitement diélectrique. En prenant comme critère que l'on souhaite ne pas dégrader l'efficacité sur toute la plage spectrale d'un coefficient (1-α) égal au plus à 15%, on obtient que l'épaisseur e de la couche diélectrique doit être inférieure à 50 nm.

Pour ne pas dégrader l'efficacité de diffraction du réseau 6, l'épaisseur e du dépôt de diélectrique ne doit donc pas dépasser quelques dizaines de nm, ce qui est tout à fait réalisable avec les moyens courants de dépôt sous vide. De plus, ces valeurs d'épaisseur sont faibles devant la profondeur de modulation h (240 nm) du réseau, ce qui limite les déformations du profil après dépôt.

On choisit donc pour continuer l'explication de l'invention une épaisseur de traitement diélectrique e égale à environ 25 nm.

La figure 6 représente une courbe d'efficacité de diffraction η en polarisation TM d'un réseau de diffraction 6 à profil sinusoïdal métallique de modulation 240 nm recouvert d'une couche diélectrique 4 de 25 nm d'épaisseur à l'incidence de 42° en fonction de la longueur d'onde sur un domaine de compris entre 700 nm et 900 nm.

Le réseau de diffraction 6 comprenant une couche diélectrique 4 en surface du substrat métallique 2 ou métallisé 2' conserve une efficacité de diffraction η très élevée (>91%) sur la plage spectrale d'intérêt.

Il s'agit maintenant de démontrer l'effet bénéfique pour la tenue au flux laser pour des impulsions ultra-intenses dont la durée est dans le domaine des impulsions femtosecondes. Dans ce domaine de fonctionnement, il est maintenant démontré qu'un des paramètres important pour la tenue au flux est le carré du champ électrique au voisinage et à l'intérieur des matériaux. Le champ électrique de l'onde électromagnétique lumineuse est donc le paramètre à étudier.

Nous présentons une simulation du champ électrique existant dans et autour du profil du réseau pour le cas du réseau métallique sinusoïdal 5 de l'art antérieur et pour le cas du réseau 6 métallique recouvert d'une couche mince diélectrique 4. Ceci pour les mêmes conditions d'utilisation à savoir un angle d'incidence θ de 42° et une longueur d'onde centrale λ de 800 nm en polarisation TM.

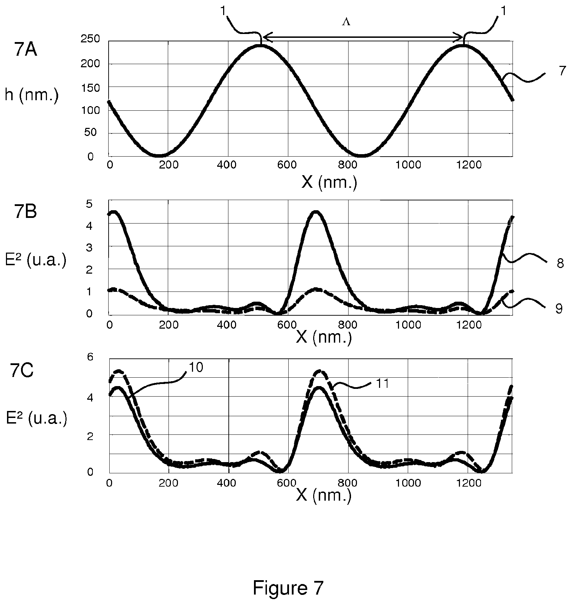

La figure 7A représente le profil des traits dans un plan transverse aux traits du réseau (seuls deux traits du réseau sont représentés), profil utilisé dans les simulations des figures 7B et 7C. L'abscisse représente la direction X de la périodicité des traits du réseau (en nm) et l'ordonnée représente la profondeur des traits en nm. Le bas du profil sinusoïdal est à l'ordonnée 0 repéré par la ligne fine horizontale, le profil a pour profondeur de modulation h=240 nm. Dans les simulations, on utilise respectivement un réseau métallique classique, la surface 12 du réseau 5 ayant le profil de la fig. 7A et un réseau métallique recouvert d'une couche mince diélectrique, la surface 14 du réseau 6 ayant également le profil de la fig. 7A.

La figure 7B représente l'amplitude du champ électrique au carré pour le cas d'un réseau métallique 5 de l'art antérieur à une distance de 5 nm en avant de l'interface métal-air (ou métal-vide) dans le cas d'un réseau métallique de l'art antérieur (courbe 8 en trait plein), et respectivement à une distance de 5nm de l'interface métal-diélectrique pour un réseau métallique recouvert d'une couche de 25nm de matériau diélectrique (courbe 9 tiretée), donc à l'intérieur de la couche diélectrique 4.

Sur la courbe 8 d'un réseau métallique 5 on s'aperçoit qu'il y a une zone sur la pente droite du profil où le renforcement du champ électrique est fort (surintensité d'un facteur pouvant atteindre quatre) sur le flanc droit des traits du réseau au niveau de l'interface air-métal (ou vide-métal) : cette zone d'un réseau métallique est la zone exposée à la densité de champ électrique la plus élevée et sera donc endommagée en premier dans le régime femtoseconde.

La courbe 9 montre que pour un réseau selon l'invention, l'intensité du champ électrique à 5nm de l'interface métal-diélectrique est fortement atténuée comparée à la courbe 8. On n'observe pas de renforcement du champ électrique au voisinage du métal.

La figure 7C représente l'amplitude du champ électrique au carré pour le cas d'un réseau métallique de l'art antérieur à une distance de 30 nm en avant de l'interface métal-air (ou métal-vide) dans le cas d'un réseau métallique de l'art antérieur (courbe 10 en trait plein), et respectivement à une distance de 30 nm de l'interface métal-diélectrique pour un réseau métallique recouvert d'une couche de 25 nm de matériau diélectrique (courbe 11 tiretée), donc dans le vide à 5nm de la surface 14 de la couche diélectrique.

On observe les mêmes pics de sur-intensité dans le vide à une distance de 5 nm de l'interface diélectrique/vide qu'à 30 nm de l'interface métal/vide. Cependant, la très bonne résistance d'une couche diélectrique notamment en silice permet au réseau de l'invention de supporter ces surintensités tandis qu'un réseau métallique classique de l'art antérieur ne supporte pas de telles surintensités en régime femtoseconde.

Le réseau de l'invention permet donc de s'approcher des limites de seuil d'endommagement des réseaux de type MLD.

En conclusion, l'effet de la couche diélectrique 4 permet de repousser les zones de renforcement du champ électrique de l'onde électro-magnétique loin de la surface métallique et de la couche métallique du substrat. Les matériaux diélectriques comme la silice ayant intrinsèquement une tenue au flux très supérieure aux métaux, la tenue au flux du composant est très notablement améliorée. Dans l'art antérieur le point faible du composant était l'interface air-métal (ou vide-métal). L'invention permet de repousser les zones où le champ électrique est renforcé loin de l'interface critique métallique sur une interface diélectrique-air (ou vide) beaucoup plus résistante au flux.

Le réseau de diffraction 6 métallique recouvert d'une couche mince diélectrique 4 présente une très bonne efficacité de diffraction (>90%) sur une très large bande passante (200 nm) avec une tenue au flux qui peut avoisiner celle des réseaux MLD.

L'objet de l'invention permet d'améliorer un réseau de diffraction à haute efficacité en régime femtoseconde en éloignant le plus possible les zones de renforcement du champ des matériaux constituant le réseau et en utilisant un matériau résistant là où le champ électrique est le plus fort.

L'invention s'applique à des réseaux sur des substrats plans, concaves ou convexes.

L'invention permet ainsi de repousser les maximas de champ électrique hors de la matière tout en conservant une bonne efficacité sur une grande bande passante, cela pour un réseau métallique modifié. L'invention trouve une première application dans la compression d'impulsions laser. L'invention trouve également des applications dans la tenue au flux laser de composants dans des lasers à haute puissance (MégaJoule, Petawatt).

Le procédé de fabrication du réseau de l'invention est moins compliqué que celui d'un réseau MLD. Le réseau de l'invention est moins coûteux qu'un réseau MLD.

## Revendications

1. Réseau de diffraction métallique en réflexion (6) à très haute efficacité de diffraction pour diffracter des impulsions laser en régime femtoseconde, ledit réseau étant constitué :
- d'un substrat (2) comprenant un ensemble de traits (1) de pas Λ, d'une couche métallique (2') recouvrant ledit substrat (2), et
- d'une couche mince (4) en matériau diélectrique d'épaisseur e, ladite couche mince diélectrique (4) recouvrant la surface métallique (12) des traits du réseau,
- ledit réseau (6) étant apte à recevoir une onde électromagnétique lumineuse impulsionnelle en régime femtoseconde,
**caractérisé en ce que** :
- ladite couche métallique (2') étant en or, et
- l'épaisseur e de la couche mince diélectrique (4) est inférieure à 50 nm, l'épaisseur e étant apte à diminuer d'au moins un facteur trois les maxima du carré du champ électrique de l'onde électromagnétique lumineuse sur la surface métallique (12) et dans la couche métallique du substrat (2, 2'), comparé au carré du champ électrique en surface d'un réseau métallique (5) dépourvu de couche mince diélectrique, de manière à améliorer la tenue au flux laser du réseau de diffraction en régime femtoseconde.

2. Réseau de diffraction (6) selon la revendication 1 **caractérisé en ce que** le réseau de diffraction (6) est un réseau polarisé TM.

3. Réseau de diffraction (6) selon l'une des revendications 1 ou 2, **caractérisé en ce que** les traits (1) du réseau ont, dans un plan transverse à la direction des traits (1), un profil sinusoïdal, pseudo-sinusoïdal, triangulaire, rectangulaire, trapézoïdal ou pseudo-trapézoïdal.

4. Réseau de diffraction (6) selon l'une des revendications 1 à 3 **caractérisé en ce que** la couche mince diélectrique (4) a une épaisseur e inférieure à la profondeur de modulation h des traits (1) du réseau.

5. Réseau de diffraction (6) selon l'une des revendications 1 à 4 **caractérisé en ce que** la couche mince diélectrique (4) est en silice (SiO₂).

6. Système d'amplification d'impulsions laser à dérive de fréquence (CPA) comprenant un étage pour étirer temporellement les impulsions laser, un ou plusieurs étages d'amplification, et un étage de compression pour compresser temporellement les impulsions amplifiées, **caractérisé en ce que** l'étage de compression comprend au moins un réseau de diffraction (6) selon l'une des revendications 1 à 5.

7. Procédé d'amélioration du seuil d'endommagement d'un réseau de diffraction métallique à un faisceau laser intense en régime femtoseconde, comprenant une étape de :
- sélection d'un réseau de diffraction à très haute efficacité de diffraction en réflexion constitué d'un substrat (2) comprenant un ensemble de traits (1) de pas Λ, et d'une couche métallique (2') en or recouvrant ledit substrat (2), **caractérisé en ce qu'**il comprend une étape de :
- dépôt d'une couche mince diélectrique (4) sur la surface métallique (12) des traits du réseau, ladite couche mince diélectrique (4) étant transparente sur la bande passante spectrale des impulsions femtoseconde et l'épaisseur e de la couche diélectrique (4) étant apte à diminuer d'au moins un facteur trois les maxima du champ électrique de l'onde électromagnétique lumineuse sur la surface métallique (12) et dans la couche métallique (2, 2'), comparé au champ électrique en surface d'un réseau métallique (5) dépourvu de couche mince diélectrique.

## Patentansprüche

1. Reflektierendes Metallbeugungsarray (6) mit einem hohen Beugungswirkungsgrad zum Beugen von Laserimpulsen im Femtosekundenbereich, wobei das Array aus
- einem Substrat (2), das eine Gesamtheit von Linien (1) mit Abstand A aufweist, einer das Substrat (2) bedeckenden Metallschicht (2') und
- einer Dünnschicht (4) aus einem dielektrischen Material der Dicke e besteht, wobei die dielektrische Dünnschicht (4) die metallene Oberfläche (12) der Linien des Arrays bedeckt,
- wobei das Array (6) dazu ausgelegt ist, eine impulsartige elektromagnetische Lichtwelle im Femtosekundenbereich aufzunehmen,
**dadurch gekennzeichnet, daß**
- die Metallschicht (2') aus Gold ist und
- die Dicke e der dielektrischen Dünnschicht (4) kleiner als 50 nm ist, wobei die Dicke e dazu geeignet ist, die Maxima des Quadrats des elektrischen Felds der elektromagnetischen Lichtwelle auf der Metallfläche (12) und in der Metallschicht des Substrats (2, 2'), verglichen mit dem Quadrat des elektrischen Felds an der Oberfläche eines Metallgitters (5) ohne dielektrische Dünnschicht, um wenigstens das Dreifache zu verringern, um den Widerstand des Beugungsarrays gegenüber dem Laserfluß im Femtosekundenbereich zu verbessern.

2. Beugungsarray (6) gemäß Anspruch 1, **dadurch gekennzeichnet, daß** das Beugungsarray (6) ein polarisiertes TM-Array ist.

3. Beugungsarray (6) gemäß einem der Ansprüche 1 oder 2, **dadurch gekennzeichnet, daß** die Linien (1) des Arrays in einer Ebene quer zur Richtung der Linien (1) ein sinusförmiges, pseudosinusförmiges, dreieckiges, rechteckiges, trapezförmiges oder pseudotrapezförmiges Profil aufweisen.

4. Beugungsarray (6) gemäß einem der Ansprüche 1 bis 3, **dadurch gekennzeichnet, daß** die dielektrische Dünnschicht (4) eine Dicke e kleiner als die Modulationstiefe h der Linien (1) des Arrays aufweist.

5. Beugungsarray (6) gemäß einem der Ansprüche 1 bis 4, **dadurch gekennzeichnet, daß** die dielektrische Dünnschicht (4) aus Kieselerde (SiO₂) ist.

6. System zur Verstärkung von Laserimpulsen mit Frequenzverschiebung (CPA), das eine Stufe zum zeitlichen Dehnen der Laserimpulse, eine oder mehrere Verstärkerstufen und eine Kompressionsstufe zum zeitlichen Komprimieren der verstärkten Laserimpulse aufweist, **dadurch gekennzeichnet, daß** die Kompressionsstufe wenigstens ein Beugungsarray (6) gemäß einem der Ansprüche 1 bis 5 aufweist.

7. Verfahren zum Verbessern der Beschädigungsschwelle eines Metallbeugungsarrays gegenüber einem intensiven Laserstrahl im Femtosekundenbereich, das einen Schritt
- des Auswählens eines reflektierenden Beugungsarrays mit einem hohen Beugungswirkungsgrad, das aus einem Substrat (2), das eine Gesamtheit von Linien (1) mit Abstand A aufweist, und einer das Substrat (2) bedeckenden Metallschicht (2') aus Gold besteht,
**dadurch gekennzeichnet, daß** es einen Schritt
- des Abscheidens einer dielektrischen Dünnschicht (4) auf der metallenen Oberfläche (12) der Linien des Arrays aufweist, wobei die dielektrische Dünnschicht (4) im spektralen Durchlaßband der Femtosekundenimpulse durchsichtig ist und die Dicke e der dielektrischen Schicht (4) dazu geeignet ist, die Maxima des Quadrats des elektrischen Felds der elektromagnetischen Lichtwelle auf der Metallfläche (12) und in der Metallschicht des Substrats (2, 2'), verglichen mit dem Quadrat des elektrischen Felds an der Oberfläche eines Metallgitters (5) ohne dielektrische Dünnschicht, um wenigstens das Dreifache zu verringern.

## Claims

1. A metallic reflection diffraction grating (6) having a very high diffraction efficiency for diffracting laser pulses in the femtosecond regime, said grating consisting of:
- a substrate (2) with a set of lines (1) having a pitch A, a metallic layer (2') covering said substrate (2), and
- a thin layer (4) of a dielectric material having a thickness e, said thin dielectric layer (4) covering the metallic surface (12) of the lines of the grating,
- said grating (6) being suitable for receiving a pulsed electromagnetic lightwave in the femtosecond regime,
**characterized in that**:
- said metallic layer (2') being made of gold, and
- the thickness e of the thin dielectric layer (4) is lower than 50 nm, the thickness e being suitable for reducing by at least a factor three the maxima of the square of the electric field of the electromagnetic lightwave on the metallic surface (12) and in the metallic layer of the substrate (2, 2') compared with the square of the electric field at the surface of a metallic grating (5) having no thin dielectric layer, in order to improve the laser flow resistance of the diffraction grating in the femtosecond regime.

2. A diffraction grating (6) according to claim 1, **characterized in that** the diffraction grating (6) is a TM polarized grating.

3. A diffraction grating (6) according to any one of claims 1 or 2, **characterized in that** the lines (1) of the grating have, in a plane transverse to the direction of the lines (1), a sinusoidal, pseudo-sinusoidal, triangular, rectangular, trapezoidal or pseudo-trapezoidal profile.

4. A diffraction grating (6) according to any one of claims 1 to 3, **characterized in that** the thin dielectric layer (4) has a thickness e that is smaller than the depth of modulation h of the lines (1) of the grating.

5. A diffraction grating (6) according to any one of claims 1 to 4, **characterized in that** the thin dielectric layer (4) is made of silica (SiO₂).

6. A chirped pulse amplification (CPA) system comprising one stage for time spreading the laser pulses, one or more amplification stages, and one compression stage for time compressing the amplified pulses, **characterized in that** the compression stage includes at least one diffraction grating (6) according to any one of claims 1 to 5.

7. A method for improving the damage threshold of a metallic diffraction grating to an intense laser beam in the femtosecond regime, comprising a step of:
- selecting a diffraction grating of very high reflection diffraction efficiency consisting of a substrate (2) with a set of lines (1) having a pitch Λ, and a gold metallic layer (2') covering said substrate (2),
**characterized in that** it comprises a step of:
- depositing a thin dielectric layer (4) on the metallic surface (12) of the grating lines, said thin dielectric layer (4) being transparent over the spectral bandwidth of the femtosecond pulses and the thickness e of the dielectric layer (4) being suitable for reducing by at least a factor three the maxima of the electric field of the electromagnetic lightwave on the metallic surface (12) and in the metallic layer (2, 2'), compared with the electric field at the surface of a metallic grating (5) having no thin dielectric layer.
